# EUROPEAN PATENT APPLICATION

(11) **EP 3 985 754 A1**
(43) Date of publication of application: **20.04.2022**
(21) Application number: 20201700.0
(22) Date of filing: 14.10.2020
(51) Int. Cl.: H01M 4/04, H01M 4/131, H01M 4/1391, H01M 4/36, H01M 4/505, H01M 4/525, H01M 4/62, H01M 10/0562, H01M 10/052, H01M 4/02

(54) **ELECTRON-CONDUCTING ADDITIVE FOR CATHODES**

(71) Applicant: BASF SE, 67056 Ludwigshafen am Rhein (DE); Justus-Liebig-Universität Gießen, 35390 Gießen (DE)
(72) Inventor: JANEK, Jürgen, 35392 Gießen (DE); WALTHER, Felix, 35392 Gießen (DE); RANDAU, Simon, 35392 Gießen (DE); RICHTER, Felix H., 35392 Gießen (DE)
(74) Representative: Eisenführ Speiser

(57) **Abstract**

Described are a mixture comprising an electron-conducting additive for a cathode of an electrochemical cell, a process for preparing said mixture, a cathode for an electrochemical cell comprising said mixture, and an electrochemical cell comprising said cathode, as well as the use of an electron-conducting additive for a cathode.

## Description

Described are a mixture comprising a cathode active material and an electron-conducting additive for a cathode of an electrochemical cell, a process for preparing said mixture, a cathode for an electrochemical cell comprising said mixture, and an electrochemical cell comprising said cathode, as well as the use of an electron-conducting additive for a cathode.

A cathode of an electrochemical cell, especially of an all-solid-state electrochemical cell having an anode capable of reversibly plating and stripping lithium metal or reversibly de-intercalating and intercalating lithium ions, usually contains an electron-conducting additive which serves to facilitate electronic contact of the particles of the cathode active material with one another resp. with the current collector, but shall not take part in the cathode reaction. Often such additives contain electron conducting carbon. While the presence of such additive usually provides for an increased initial capacity due to increased utilization of the cathode active material, during charge/discharge cycling of an all-solid-state cell having a cathode containing electron-conducting carbon as additive often a rapid capacity loss is observed. Accordingly, the beneficial effect of additives containing electron conducting carbon is often not maintained over a sufficient number of charge/discharge cycles. Thus, all-solid-state cells may suffer from a significant long-term capacity loss with an enhanced formation of degradation and decomposition products. Said effect is attributed to interaction between the solid electrolyte and the carbon material of the electron-conducting additive at the solid electrolyte/carbon interface.

It is an objective of the present disclosure to overcome this disadvantage.

According to a first aspect, there is provided a mixture for a cathode of an electrochemical cell. Said mixture comprises the constituents
(a) particles of one or more cathode active materials
(b) composite particles each comprising
   (i) a basis structure comprising electron conducting carbon
      and
   (ii) deposited on a surface region of said basis structure a coating consisting of one or more metal oxides not capable of reversibly intercalating and de-intercalating lithium ions.

More specifically, said mixture comprises the constituents
(a) particles of one or more materials capable of reversibly intercalating and de-intercalating lithium ions
(b) composite particles each comprising
   (i) a basis structure comprising electron conducting carbon
      and
   (ii) deposited on a surface region of said basis structure a coating consisting of one or more metal oxides not capable of reversibly intercalating and de-intercalating lithium ions.

Constituent (a) of the mixture is the cathode active material. In the context of the present disclosure, the electrode of an electrochemical cell where during discharging of the cell a net positive charge is released is called the cathode, and the component of the cathode by reduction of which said net positive charge is released is referred to as a "cathode active material". Said released net positive charge is compensated by intercalation of lithium ions into the cathode active material. During charging of the cell, a net positive charge is accepted by the cathode active material which is compensated by de-intercalation of lithium ions out of the cathode active material.

Constituent (b) of the mixture is in the form of composite particles. Each composite particle comprises (i) a basis structure and (ii) a coating deposited on a surface region of said basis structure. The basis structure (i) comprises or consists of electron conducting carbon. The coating (ii) consists of one or more metal oxides not capable of reversibly intercalating and de-intercalating lithium ions. Thus, each composite particle comprises (i) a basis structure comprising or consisting of electron conducting carbon and (ii) deposited on a surface region of said basis structure a coating consisting of one or more metal oxides not capable of reversibly intercalating and de-intercalating lithium ions.

In a composite particle (b), the surface of the basis structure (i) of the composite particle is not necessarily completely covered or encapsulated by the coating (ii). In some or all composite particles (b), the basis structure (i) may exhibit a surface region where coating (ii) is deposited and a surface region where no coating (ii) is deposited. For instance, the coating may form island-like surface regions on a basis structure (i), so that the remaining uncoated surface regions of the basis structure (i) are available for electron conducting contact with the cathode active material resp. with the current collector; or island-like surface regions of the basis structure (i) may remain uncoated and are available for electron conducting contact with the cathode active material resp. with the current collector.

Surprisingly it has been found that although in the composite particles (b) a coating (ii) as defined above is deposited on a surface region of the basis structure (i) comprising electron conducting carbon, said basis structures (i) comprising electron conducting carbon can still provide electron-conducting pathways for connecting the particles of the cathode active material with one another resp. with the current collector, and the capacity loss during charge/discharge cycling of a cell comprising such cathode is significantly reduced.

In the mixture according to the invention, the particles (a) of the one or more materials capable of reversibly intercalating and de-intercalating lithium ions do not have a coating (ii) as defined above.

Cathode active materials capable of reversibly intercalating and de-intercalating lithium ions are known in the art.

Preferred cathode active materials are selected from the group consisting of materials having a composition according to general formula (I)

Li₁₊ₜ[CoₓMn_{y}Ni_{z}Mᵤ]₁₋ₜO₂ (I)

wherein
0 ≤ x ≤ 1
0 ≤ y ≤ 1
0 ≤ z ≤ 1
0 ≤ u ≤ 0.15
M if present is one or more elements selected from the group consisting of Al, Mg, Ba, B, and transition metals other than Ni, Co, and Mn,
x + y + z > 0
x+y+z+u=1
-0.05 ≤ t ≤ 0.2.

In certain cathode active materials according to formula (I), M may be one of Al, Mg, Ti, Mo, Nb, W and Zr. Exemplary cathode active materials of formula (I) are Li₁₊ₜ[Ni_{0.88}Co_{0.08}Al_{0.04}]₁₋ₜO₂, Li₁₊ₜ[Ni_{0.905}Co_{0.0475}Al_{0.0475}]₁₋ₜO₂, and Li₁₊ₜ[Ni_{0.91}Co_{0.045}Al_{0.045}]₁₋ₜO₂, wherein in each case -0.05 ≤ t ≤ 0.2.

Exemplary cathode active materials are compounds of formula (la):

Li₁₊ₜA₁₋ₜO₂ (Ia)

wherein
A comprises nickel
   and one or both members of the group consisting of cobalt and manganese,
   and optionally
   - one or more further transition metals not selected from the group consisting of nickel, cobalt and manganese, wherein said further transition metals are preferably selected from the group consisting of molybdenum, titanium, tungsten, zirconium,
   - one or more elements selected from the group consisting of aluminum, barium, boron and magnesium,
   wherein at least 50 mole-% of the transition metal of A is nickel;
t is a number in the range of from -0.05 to 0.2.

Exemplary cathode active materials of formula (Ia) are Li₁₊ₜ[Ni_{0.85}Co_{0.10}Mn_{0.05}]₁₋ₜO₂, Li₁₊ₜ[Ni_{0.87}Co_{0.05}Mn_{0.08}]₁₋ₜO₂, Li₁₊ₜ[Ni_{0.83}Co_{0.12}Mn_{0.05}]₁₋₋ₜO₂, Li₁₊ₜ[Ni_{0.6}Co_{0.2}Mn_{0.2}]₁₋ₜO₂, Li₁₊ₜ[Ni_{0.88}Co_{0.08}Al_{0.04}]₁₋ₜO₂, Li₁₊ₜ[Ni_{0.905}Co_{0.0475}Al_{0.0475}]₁₋ₜO₂, and Li₁₊ₜ[Ni_{0.91}Co_{0.045}Al_{0.045}]₁₋ₜO₂, wherein in each case -0.05 ≤ t ≤ 0.2.

In other cathode active materials according to formula (I), M is not present. Those cathode active materials have a composition according to general formula (lb):

Li₁₊ₜ[CoₓMn_{y}Ni_{z}]₁₋ₜO₂ (Ib)

wherein
0 ≤ x ≤ 1
0 ≤ y ≤ 1
0 ≤ z ≤ 1
x + y + z = 1
-0.05 ≤ t ≤ 0.2.

Preferably, the cathode active material according to general formula (lb) is a mixed oxide of lithium and at least one of nickel and manganese. More preferably, the cathode active material is a mixed oxide of lithium, nickel and one or both members of the group consisting of cobalt and manganese.

Exemplary cathode active materials according to formula (Ib) are LiCoO₂, Li₁₊ₜ[Ni_{0.85}Co_{0.10}Mn_{0.05}]₁₋ₜO₂, Li₁₊ₜ[Ni_{0.87}Co_{0.05}Mn_{0.08}]₁₋ₜO₂, Li₁₊ₜ[Ni_{0.83}Co_{0.12}Mn_{0.05}]₁₋₋ₜO₂, and Li₁₊ₜ[Ni_{0.6}Co_{0.2}Mn_{0.2}]₁₋ₜO₂ (NCM622) and LiNi_{0.5}Mn_{1.5}O₄, wherein in each case -0.05 ≤ t ≤ 0.2.

Structures comprising electron conducting carbon which are commonly used as electron-conducting additive for cathodes are known in the art. Preferably, in constituent (b) of the above-defined composite said basis structure (i) is selected from the group consisting of carbon nanofibers, carbon nanotubes, graphene, carbon black, acetylene black, coke, graphene oxide.

Carbon nanofibers and carbon nanotubes are nanoobjects. According to ISO/TS 27687:2008 (as published in 2008), the term "nanoobject" refers to an object having one, two or three external dimensions in the nanoscale. According to ISO/TS 27687:2008, nanoobjects having two similar external dimensions in the nanoscale, while the third external dimension is significantly larger, are generally referred to as nanofibers. The third significantly larger dimension differs from the nanoscale dimension by more than three times. The third external dimension is not necessarily in the nanoscale. Said third external dimension corresponds to the length of the nanofibers. Nanofibers typically have a cross section close to circular shape. Said cross section extends perpendicularly to the length. Said two external dimensions which are in the nanoscale are defined by the diameter of said circular cross section. Hollow nanofibers are referred to as nanotubes. Techniques for producing carbon nanofibers and carbon nanotubes are known in the art. Referring to the mechanism of producing carbon nanofibers, carbon nanofibers are often referred to as vapor grown carbon fibers (VGCF).

Preferred are carbon nanofibers having a length in the range of from 1 µm to 200 µm, and a diameter in the range of from 10 nm to 200 nm.

The one or more metal oxides, which in the composite particles (b) form a coating (ii) deposited on a surface region of the basis structure (i), are different from the cathode active materials (a). The metal oxides which form the coating (ii) are not capable of reversibly intercalating and de-intercalating lithium ions and do not undergo any redox reaction during charging and discharging of the electrochemical cell.

The metal oxides which form the coating are typically no lithium ion conductors.

In certain cases, the one or more metal oxides which form the coating (ii) are selected from the group consisting of metal oxides having a specific electronic conductivity of 10⁻³ S/cm or less, preferably 10⁻⁸ S/cm or less, in each case at a temperature of 298.25 K. Metal oxides having a specific electronic conductivity of 10⁻³ S/cm or less at a temperature of 298.25 K, but more than 10⁻⁸ S/cm at a temperature of 298.25 K are semiconductors. Metal oxides having a specific electronic conductivity of 10⁻⁸ S/cm or less at a temperature of 298.25 K are insulators.

In certain cases, the one or more metal oxides which form the coating (ii) are selected from the group consisting of metal oxides having a band gap of 3 eV or more at a temperature of 300 K.

In certain cases, the one or more metal oxides which form the coating (ii) are selected from the group consisting of metal oxides having a relative dielectric constant εᵣ of 3.9 or more at a temperature of 298.25 K.

Preferably, the one or more metal oxides which form the coating (ii) are selected from the group consisting of metal oxides having one or more of
- a specific electronic conductivity of 10⁻³ S/cm or less, or 10⁻⁸ S/cm or less, in each case at a temperature of 298.25 K
- a band gap of 3 eV or more at 300 K
- a relative dielectric constant εᵣ of 3.9 or more at a temperature of 298.25 K.

More preferably, the one or more metal oxides which form the coating (ii) are selected from the group consisting of metal oxides having
- a specific electronic conductivity of 10⁻³ S/cm or less, preferably 10⁻⁸ S/cm or less at a temperature of 298.25 K,
   and
- a band gap of 3 eV or more at 300 K
   and
- a relative dielectric constant εᵣ of 3.9 or more at a temperature of 298.25 K.

For instance, the one or more metal oxides which form the coating (ii) are selected from the group consisting of SiO₂, Al₂O₃, Y₂O₃, HfO₂, ZrO₂, La₂O₃, Ta₂O₅, TiO₂, ZnO, MgO, NiO, SnO₂, CeO₂, Ce₂O₃, and V₂O₃.

Preferably, the coating does not contain lithium tantalate ("LTO"). More preferably, the coating does not contain any mixed oxide of lithium and one or more further metals.

Most preferably, in the composite particles (b) the coating (ii) contains or consists of Al₂O₃. Al₂O₃ meets the criteria of a specific electronic conductivity of 10⁻⁸ S/cm or less at a temperature of 298.25 K, a band gap of 3 eV or more at a temperature of 300 K and a relative dielectric constant εᵣ of 3.9 or more at a temperature of 298.25 K.

In composite particles (b), said coating (ii) deposited on surface regions of said basis structures (i) may have a thickness of 100 nm or less, preferably in the range of from 2 nm to 40 nm. In case the coating (ii) would be too thick, the coating may electrically insulate the electron conducting carbon of the basis structures (i) so strong that the functionality of the carbon as electron-conducting additive is significantly reduced or even lost. In case the coating (ii) would be too thin, the effect of the coating (ii) may be not sufficient.

Preferably, in a mixture according to the above defined first aspect the composite particles (b) each comprise (i) a basis structure which is a carbon nanofiber and (ii) a coating of Al₂O₃ deposited on surface regions of said carbon nanofiber.

Beside constituents (a) and (b) as defined above, a mixture according to the above-defined first aspect may further comprise constituent
(c) one or more lithium ion conducting solid electrolytes, wherein said one or more solid electrolytes are preferably selected from the group consisting of lithium transition metal halides, lithium containing sulfides, lithium containing oxysulfides, lithium-containing oxyphosphates, lithium-containing thiophosphates, lithium argyrodites (e.g. lithium containing halo-thiophosphates), and lithium containing oxyphosphonitrides, salt-in-polymer-electrolytes, and polymer single ion conductors.

Herein, the term "lithium-containing" means that cations of other metals than lithium may be present in the chemical compound forming the solid electrolyte.

Lithium argyrodites are disclosed e.g. in US 8,075,865 B2 and are e.g. compounds of formula (*)

Li₍₁₂₋ₙ₋ₓ₎Bⁿ⁺X²⁻₆₋ₓY⁻ₓ (*)

wherein
B is selected from the group consisting of P, As, Ge, Ga, Sb, Si, Sn, Al, In, Ti, V, Nb, and Ta,
X is selected from the group consisting of S, Se, and Te,
Y is selected from the group consisting of CI, Br, I, F, CN, OCN, SCN, and N₃,
and 0 ≤ x ≤ 2.

Argyrodites wherein B is more than one of P, As, Ge, Ga, Sb, Si, Sn, Al, In, Ti, V, Nb, and Ta are also known.

Suitable solid electrolytes are solid materials according to general formula (**) as disclosed in WO 2020/038960 A1

LiₐPS_{b}O_{c}X_{d}Yₑ (**)

wherein
X and Y are different and are selected from the group consisting of CI, Br and I,
a is in the range of from 4.5 to 7.5,
b is in the range of from 3.0 to 5.4,
c is in the range of from 0.1 to 2,
b + c is in the range of from 4.4 to 6,
d is in the range of from 0 to 1.6,
e is in the range of from 0 to 1.6,
d + e is in the range of from 0.4 to 1.8,
b + c + d + e is in the range of from 4.8 to 7.6,
and preferably a = 3 + 2(b + c - 4) + d + e.

Further suitable solid electrolytes are solid materials (lithium transition metal halides) according to general formula (***) as disclosed in non-prepublished patent application EP 19207728.7- 1108

Li_{3-n∗x}M₁₋ₓM'ₓX_{y} (***)

wherein
M is one or more selected from the group consisting of Sc, In, Lu, La, Er, Y and Ho;
M' is one or more selected from the group consisting of Ti, Zr, Hf, Nb and Ta;
X is one or more selected from the group consisting of halides and pseudohalides;
0.12 ≤ x ≤ 0.42;
5.8 ≤ y ≤ 6.2;
n is the difference between the valences of M' and M.

Other suitable solid electrolytes are solid materials (lithium transition metal halides) according to general formula (****) as disclosed in non-prepublished patent application EP 20170190.1-1106

LiₐAX₄ (****)

wherein
X is one or more selected from the group consisting of CI, F, Br and I
   (a) A is M1_{b}M2_{c}
      wherein
      M1 is a first trivalent metal and M2 is a second trivalent metal different from M1,
      0.1 ≤ b ≤ 0.8,
      0 ≤ c ≤ 0.7,
      0.6 ≤ (b+c) ≤ 0.8
      a = 4 - 3(b+c)
   (b) A is M1_{d}M3ₑ
      wherein
      M1 is a trivalent metal and M3 is a divalent metal,
      0.3 ≤ d ≤ 0.8,
      0.2 ≤ e ≤ 0.7,
      0.9 ≤ (d+e) ≤ 1.1,
      a = 4 - 3d - 2e.

Salt-in-polymer electrolytes comprise a lithium ion conducting salt e.g. LiClO₄ dispersed in a polymeric matrix, e.g. polyethylene oxide (PEO). Salt-in-polymer electrolytes, in particular those comprising LiClO₄ and polyethylene oxide (PEO) are not preferred.

Admixing a solid electrolyte to the cathode active material facilitates the transport of ions towards and away from the cathode active material.

Preferably, the lithium ion conducting solid electrolyte (c) does not contain lithium tantalate ("LTO").

Preferably, said solid electrolyte is selected from the group consisting of lithium containing sulfides, lithium containing oxysulfides, and lithium-containing thiophosphates, lithium transition metal halides, and lithium argyrodites (lithium containing halo-thiophosphates) as defined above.

A mixture according to the above-defined first aspect may comprise
- constituent (a) in an amount of from 60 wt% to 99.9 wt%
- constituent (b) in a total amount of from 0.1 wt% to 10 wt%
- constituent (c) in an amount of from 0 wt% to 39.9 wt%

in each case based on the total weight of said constituents (a), (b), and (c). Adjusting the fraction of constituents (a), (b) and (c) according to the above-defined ranges provides for a suitable balance between capacity (which is determined by the fraction of constituent (a)), electronic conductivity (which is determined by the fraction of constituent (b)) and - if constituent (c) is present - ionic conductivity.

In certain preferred cases a mixture according to the above-defined first aspect comprises
(a) a material having a composition according to general formula (la)

   Li₁₊ₜ[CoₓMn_{y}Ni_{z}]₁₋ₜO₂ (Ia)

   wherein
   0 ≤ x ≤ 1
   0 ≤ y ≤ 1
   0 ≤ z ≤ 1
   x + y + z = 1
   -0.05 ≤ t ≤ 0.2.
(b) composite particles each comprising (i) a basis structure which is a carbon nanofiber and (ii) a coating of Al₂O₃ deposited on a surface region of said carbon nanofiber
(c) optionally a solid electrolyte selected from the group consisting of lithium containing sulfides, lithium containing oxysulfides, and lithium-containing thiophosphates, lithium transition metal halides, and lithium argyrodites (lithium containing halo-thiophosphates) as defined above.

Beside constituents (a) and (b) as defined above and optionally constituent (c) as defined above, a mixture according to the above-defined first aspect may further comprise constituent
(d) one or more binding agents.

Typical binding agents are poly(vinylidenefluroride) (PVDF), styrene-butadiene rubber (SBR), polyisobutene, poly(ethylene vinyl acetate) and poly(acrylonitrile butadiene).

According to a second aspect, there is provided a process for preparing a mixture according to the above-defined first aspect. Said process comprises the steps
- preparing composite particles (b) by means of atomic layer deposition of a coating (ii) consisting of one or more metal oxides not capable of reversibly intercalating and de-intercalating lithium ions on surface regions of basis structures (i) comprising electron conducting carbon
- mixing said composite particles (b) with
   (a) particles of one or more materials capable of reversibly intercalating and de-intercalating lithium ions
      and optionally one or both of constituents
   (c) one or more lithium ion conducting solid electrolytes
      and
   (d) one or more binding agents.

In the above-defined process, a coating (ii) consisting of one or more metal oxides not capable of reversibly intercalating and de-intercalating lithium ions is deposited by means of atomic layer deposition on surface regions of basis structures (i) comprising electron conducting carbon. No such coating is deposited on the particles (a) of one or more materials capable of reversibly intercalating and de-intercalating lithium ions.

Atomic Layer Deposition (ALD) is known in the art. It is a thin-film deposition technique by means of which a film is grown on a surface of an object by exposing said surface to a gas flow comprising a gaseous precursor of an atom species to be deposited on said surface. In order to form a metal oxide layer on a surface, a cycle (a so-called ALD cycle) is carried out comprising the steps of exposing the surface to an oxygen-carrying precursor (e.g. water) which is chemisorbed at the surface, removing excess molecules of the oxygen-carrying precursor by flushing with an inert gas, exposing the surface to a metal carrying precursor (e.g. an organometallic compound) which reacts with the chemisorbed oxygen-carrying precursor to form the metal oxide, and removing excess molecules of the metal-carrying precursor and gaseous by-products by flushing with an inert gas. Further ALD cycles with the same or other precursors may follow, depending on the desired thickness and composition of the film to be formed.

For atomic layer deposition of Al₂O₃, trimethylaluminum, aluminum triisopropoxide, aluminum chloride, dimethyl aluminum chloride and amides of aluminum may be used as the aluminum precursor.

In the process of atomic layer deposition, the precursor molecules of different atoms are never present simultaneously in the reactor, but they are inserted into the reactor chamber as a series of sequential, non-overlapping pulses, and between the pulses the reactor chamber is flushed with inert gas. In each of these pulses the precursor molecules react with the surface in a self-limiting way, so that the reaction terminates once all the reactive sites on the surface are consumed. Consequently, the maximum amount of material deposited on the surface after a single exposure to all of the precursors of one oxide (a so-called ALD cycle) is determined by the nature of the precursor-surface interaction. By varying the number of cycles it is possible to grow materials uniformly and with high precision. Atomic layer deposition allows precise control of the thickness and of the chemical composition of the coating. Since by atomic layer deposition technique one mono-layer is deposited per each cycle of gas flow, the composition of the deposited coating can be precisely controlled by the number of cycles for each gas flow.

The coating (ii) formed by atomic layer deposition does not necessarily cover the complete surface of the basis structure (i). In some or all composite particles (b), the basis structure (i) may exhibit a surface region where coating (ii) is deposited and a surface region where no coating (ii) is deposited. Indeed, the coating may form island-like surface regions on a basis structure (i), so that the remaining uncoated surface regions of the basis structure (i) are available for electron conducting contact with the cathode active material resp. with the current collector; or island-like surface regions of the basis structure (i) may remain uncoated and are available for electron conducting contact with the cathode active material resp. with the current collector.

Said coating (ii) deposited on surface regions of said basis structure (i) may have a thickness of 100 nm or less, preferably in the range of from 2 nm to 40 nm.

In the above-defined process, mixing is preferably carried out by means of grinding together the constituents (a), (b) and optionally one or both of constituents (c) and (d), e.g. by means of ball-milling. During grinding some of the composite particles (b) may be broken, thereby exposing uncoated carbon which allows for electron-conducting contact with the cathode active material resp. with the current collector.

In the above-defined process, the constituents (a), (b) and optionally (c) may be admixed such that based on the total weight of said constituents (a), (b), and (c)
- the total amount of constituent (a) is from 60 wt% to 99.9 wt%
- the total amount of constituent (b) is from 0.1 wt% to 10 wt%
- the total amount of constituent (c) is from 0 wt% to 39.9 wt%.

Regarding specific and preferred features of constituents (a), (b), (c) and (d), the same applies as disclosed above in the context of the first aspect.

According to a third aspect, there is provided a cathode for an electrochemical cell. Said cathode comprises a mixture according to the above-defined first aspect resp. prepared by the process according to the above-defined second aspect.

Regarding specific and preferred features of said mixture, the same applies as disclosed above in the context of the first aspect.

Regarding specific and preferred features of said process, the same applies as disclosed above in the context of the second aspect.

Cathode designs for electrochemical cells and techniques for preparing cathodes for electrochemical cells are known in the art.

In a cathode according to the above-defined third aspect, the mixture according to the above-defined first aspect may be in the form of a layer. Said layer may be deposited onto a current collector. Said layer may be formed by pressing a mixture according to the above-defined first aspect into a layer, e.g. by hot pressing on a substrate, or by depositing a slurry comprising the mixture according to the above-defined first aspect and a carrier liquid on a substrate and evaporating the carrier liquid, wherein the substrate may be a current collector or a separator layer, or by forming a layer comprising a mixture according to the above-defined first aspect which typically does not contain constituent (c), and deposit a lithium ion conducting solid electrolyte onto this layer by gas phase deposition.

Alternatively, said current collector may have a structure comprising voids (e.g. a grid), and said mixture is deposited into said voids.

Further alternatively, when said current collector has a structure comprising voids (e.g. a grid), said mixture may be deposited into said voids and in the form of a layer on the current collector.

According to a fourth aspect, there is provided an electrochemical cell comprising a cathode according to the above-defined third aspect.

The above-defined electrochemical cell may be a rechargeable electrochemical cell comprising the following constituents
α) at least one anode,
β) at least one cathode according to the above-defined third aspect,
γ) at least one separator.

In the context of the present disclosure, the electrode of an electrochemical cell where during discharging of the cell a net negative charge is released is called the anode, and the component of the anode by oxidation of which said net negative charge is released is referred to as a "anode active material". Suitable anode active materials are known in the art (see below).

The separator electronically separates the cathode and the anode from each other in said cell, but allows for ionic conduction between anode and cathode.

Preferably the electrochemical cell is an all-solid state battery (ASSB).

Electrochemical cells as described above may be alkali metal ion containing cells, especially lithium-ion containing cells. In lithium-ion containing cells, the charge transport is effected by Li+ ions.

Preferably, an electrochemical cell according to the above-defined fourth aspect comprises
- a cathode according to the above-defined third aspect
- an anode comprising an anode active material capable of reversibly plating and stripping lithium metal resp. intercalating and de-intercalating lithium ions
- a separator layer comprising or consisting of a one or more lithium ion conducting solid electrolytes positioned between said cathode ands said anode.

The anode active material may be selected from lithium metal, metal alloys comprising lithium, metals capable of alloying with lithium (e.g. Si, Sn, Ag or In) and materials (e.g. graphite) capable of reversibly resp. intercalating and de-intercalating lithium ions (wherein intercalation of lithium ions takes place during charging and de-intercalation of lithium ions takes place during discharging).

Said one or more solid electrolytes in the separator layer may be selected from the group consisting of lithium containing sulfides, lithium containing oxysulfides, lithium-containing oxy-phosphates, lithium-containing thiophosphates, and lithium containing oxyphosphonitrides, lithium argyrodites (as defined above), lithium transition metal halides, salt-in-polymer-electrolytes, and polymer single ion conductors.

Herein, the term "lithium-containing" means that cations of other metals than lithium may be present in the chemical compound forming the solid electrolyte.

Suitable solid electrolytes are e.g. solid materials (lithium containing halo-thiophosphates) according to general formula (') as disclosed in non-prepublished patent application EP 20169037.7 - 1108

Li_{6+2∗n-x-m∗y}M_{y}PS₅₊ₙ₋ₓX₁₊ₓ (')

wherein
M is one or more selected from the group consisting of divalent metals Mg, Ca, Sr, Ba and Zn, and trivalent metals Sc, La, Al and Ga;
X is one or more selected from the group consisting of F, CI, Br and I;
0 ≤ x ≤ 0.8, preferably 0.15 ≤ x ≤ 0.6;
0.01 ≤ y ≤ 0.25, preferably 0.05 ≤ y ≤ 0.2, more preferably 0.05 ≤ y ≤ 0.15;
0 ≤ n ≤ 0.05;
m is 2 when M is a divalent metal and m is 3 when M is a trivalent metal.

Other suitable solid electrolytes are e.g. solid materials (lithium containing halo-thioantimoniates) according to general formula (") as disclosed in non-prepublished patent application PCT/EP2020/070526

Li_{7+x-y}MₓSb₁₋ₓS_{6-y}X_{y} (")

wherein
M is one or more selected from the group consisting of Si, Ge and Sn;
0 ≤ x ≤ 1;
X is one or more selected from the group consisting of CI, Br and I;
0.05 ≤ y ≤ 2.

Further suitable solid electrolytes are e.g. solid materials (lithium haloboro-oxysulfides) according to general formula (''') as disclosed in non-prepublished patent application PCT/EP2020/066610

Li_{2x+z}B_{2y}MₐO_{b∗a}S_{x+3y}X_{z} (''')

wherein
M is one or more selected from the group consisting of P, Si, Ge, As and Sb
X is one or more selected from the group consisting of halides and pseudohalides
x is in the range of from 0.1 to 0.7
y is in the range of from 0.05 to 0.5
z is in the range of from 0.01 to 0.5
a is in the range of from 0.01 to 0.5, preferably a is in the range of from 0.05 to 0.48
b is in the range of from 1.9 to 2.6, preferably b is in the range of from 2 to 2.5
0.995 ≤ x + y + z + a ≤ 1.005, preferably x + y + z + a =1.

For further suitable solid electrolytes refer to the disclosure provided for constituent (c) of the composite according to the first aspect.

Salt-in-polymer electrolytes, in particular those comprising LiClO₄ and polyethylene oxide (PEO) are not preferred.

In case the cathode comprises a lithium ion conducting solid electrolyte (c) as defined above, it is preferable that said electrolyte (c) is the same like the lithium ion conducting solid electrolyte of the separator.

The electrochemical cell may have a disc-like or a prismatic shape. The electrochemical cells can include a housing that can be from steel or aluminum.

A plurality of electrochemical cells as described above may be combined to an all-solid-state battery, which has both solid electrodes and solid electrolytes.

Electrochemical cells as described above can be combined with one another in alkali metal ion batteries, for example in series connection or in parallel connection. Series connection is preferred.

The electrochemical cells resp. batteries described herein can be used for making or operating cars, computers, personal digital assistants, mobile telephones, watches, camcorders, digital cameras, thermometers, calculators, laptop BIOS, communication equipment or remote car locks, and stationary applications such as energy storage devices for power plants. A further aspect of this disclosure is a method of making or operating cars, computers, personal digital assistants, mobile telephones, watches, camcorders, digital cameras, thermometers, calculators, laptop BIOS, communication equipment, remote car locks, and stationary applications such as energy storage devices for power plants by employing at least one inventive battery or at least one inventive electrochemical cell.

A further aspect of the present disclosure is the use of the electrochemical cell as described above in motor vehicles, bicycles operated by electric motor, robots, aircraft (for example unmanned aerial vehicles including drones), ships or stationary energy stores.

The present disclosure further provides a device comprising at least one inventive electrochemical cell as described above. Preferred are mobile devices such as are vehicles, for example automobiles, bicycles, aircraft, or water vehicles such as boats or ships. Other examples of mobile devices are those which are portable, for example computers, especially laptops, telephones or electrical power tools, for example from the construction sector, especially drills, battery-driven screwdrivers or battery-driven tackers.

According to a fifth aspect, there is provided the use of
(b) composite particles each comprising
(i) a basis structure comprising electron conducting elemental carbon and
(ii) deposited on surface region of said basis structure a coating consisting of one or more metal oxides not capable of reversibly intercalating and de-intercalating lithium ions
as electron-conducting additive for the cathode of an electrochemical cell.

Regarding specific and preferred features of said composite particles (b), the same applies as disclosed above in the context of the first aspect.

The invention is illustrated further by the following examples which are not limiting.

### Examples

### Preparation of composite particles (b)

Composite particles (b) were prepared by atomic layer deposition of an aluminum oxide Al₂O₃ coating (ii) on surface regions of carbon nanofibers (vapor-grown carbon fibers VGCF) which are the basis structure (i) comprising electron conducting carbon. Al(CH₃)₃ (Trimethylaluminum, TMA) and H₂O were used as precursors. The number of deposition cycles was varied (20, 50 and 100, resp.) in order to vary the thickness of the Al₂O₃ coating on surface regions of vapor-grown carbon nanofibers.

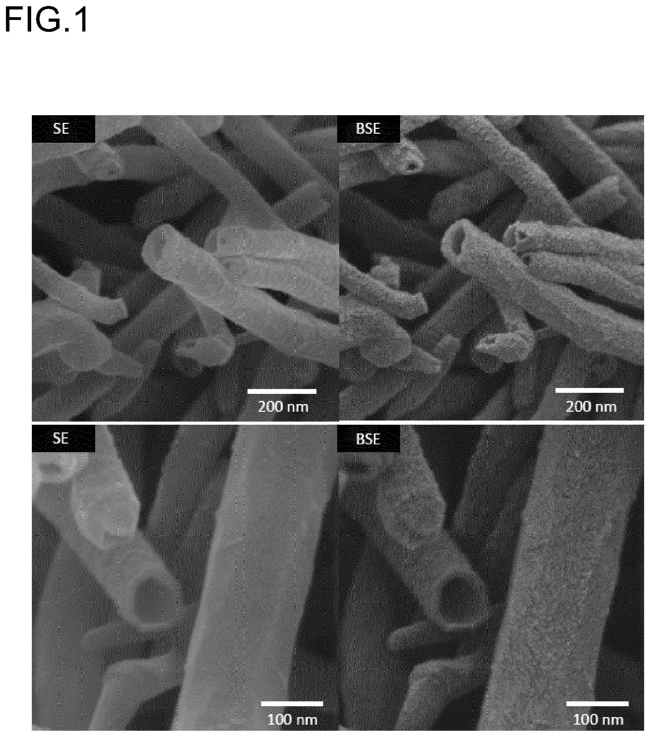

Fig. 1 shows a SEM image of vapor-grown carbon nanofibers having a coating of Al₂O₃ obtained by applying 20 atomic layer deposition cycles. The images on the left hand side of figure 1 are obtained using an in-beam secondary electron detector (SE), and the images on the right hand side are obtained using an in-beam backscattering secondary electron detector (BSE).

After 20 atomic layer deposition cycles, a layer having a thickness of about 20 nm is formed on the surface of the carbon nanofibers. Due to the applied imaging parameters and the contrast between the different materials (Al₂O₃ coating vs. carbon basis structure) the coated nanofibers appear hollow in the images of figure 1. However, the apparent hollow interior of the coated nanofiber (b) is indeed the basis structure consisting of the carbon nanofiber (i).

### Preparation of a mixture according to the above-defined first aspect

Composite particles (b) obtained as described above (coating formed by applying either 20 or 50 or 100 atomic layer deposition cycles, resp.) were admixed with
(a) cathode active material LiNi_{0.6}Co_{0.2}Mn_{0.2}
   and
(c) lithium ion conducting solid electrolyte β-Li₃PS₄ (lithium-containing thiophosphate)
by grinding together the constituents (a), (b) and (c) using a mortar. Thus, a mixture according to the above-defined first aspect is obtained which may be used for a cathode of an electrochemical cell. In said mixture,
- the total amount of constituent (a) is 67.96 wt.%
- the total amount of constituent (b) is 2.91 wt.%
- the total amount of constituent (c) is 29.13 wt.%
based on the total weight of said constituents (a), (b), and (c).

For comparison a mixture consisting of constituents (a) and (c) as defined above and uncoated (pristine) carbon nanofibers instead of above-defined composite particles (b), and a mixture consisting of constituents (a) and (c) as defined above without any electron-conducting additive were prepared.

### Galvanostatic charge/discharge cycling of electrochemical cells

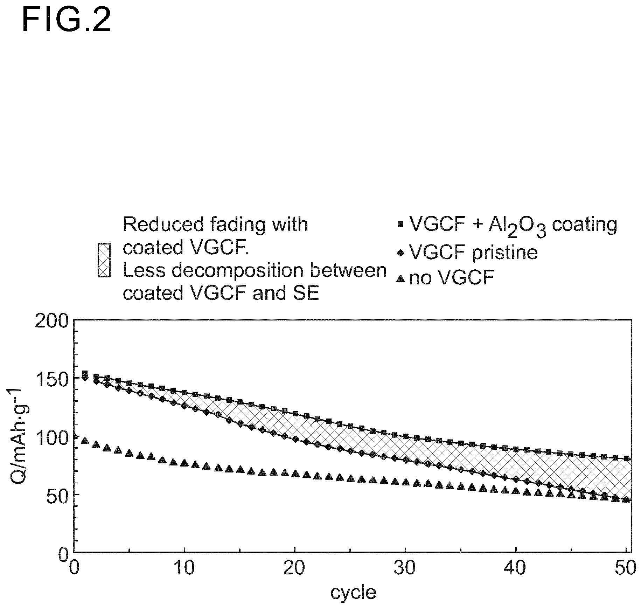

All-solid-state electrochemical cells each comprising
- a cathode comprising one of the above-defined mixtures of
   (a) LiNi_{0.6}Co_{0.2}Mn_{0.2},
   (c) β-Li₃PS₄
   and either composite particles (b) consisting of carbon nanofibers coated with Al₂O₃ (coating formed by applying either 20 or 50 or 100 atomic layer deposition cycles, resp.) or uncoated (pristine) carbon nanofibers (comparison) or no electron-conducting additive at all (comparison)
- a separator layer consisting of β-Li₃PS₄
- an anode comprising metallic lithium
were assembled, and the discharge capacity was monitored during galvanostatic charge/discharge cycling. The cells were charged up to a voltage of 4.3 V vs Li/Li⁺ and discharged down to a voltage of 2.6 V vs Li/Li⁺ by a current density of 178 µA/m². Assuming a theoretical capacity of 200 mAh/g, this corresponds to charge/discharge rate of 0.1 C. The results are shown in figure 2.

The initial capacity is significantly increased when the cathode contains either uncoated (pristine) carbon nanofibers (referred to as "VGCF pristine" in figure 2) or composite particles (b) (referred to as "VGCF + Al₂O₃ coating" in figure 2), in each case compared to the comparison cell wherein the cathode does not contain any electron-conducting additive (referred to as "no VGCF" in figure 2). This effect is attributed to improved electron-conducting contact of the cathode active material due to the presence of the carbon nanofibers, which allows higher utilization of the cathode active material.

However, during cycling the capacity of the comparison cell having a cathode comprising uncoated (pristine) carbon nanofibers rapidly decreases and at about 50 cycles is as low as the capacity of the comparison cell having a cathode without any electron-conducting additive. The significant loss of capacity during cycling of the comparison cell having a cathode comprising uncoated (pristine) carbon nanofibers is attributed to decomposition and degradation of the solid electrolyte at the solid electrolyte/carbon nanofiber interface. After 50 cycles both comparison cells (cathode either comprising uncoated carbon nanofibers or no electron-conducting additive) retained only about 30 % of their initial capacity.

In contrast, the cell according to the invention (cathode comprising composite particles (b) consisting of carbon nanofibers coated with Al₂O₃ (coating obtained by applying 20 atomic layer deposition cycles)) did not exhibit such a significant loss of capacity during cycling, and after 50 cycles 52 % of the initial capacity was retained. The significantly lower capacity loss during cycling of the cell according to the invention is attributed to suppression of the decomposition and degradation of the solid electrolyte because the Al₂O₃ coating on surface regions of the carbon nanofibers inhibits direct interaction between solid electrolyte and carbon nanofibers. The remaining capacity loss of the cell according to the invention is mainly attributed to inevitable intrinsic degradation of the cathode active material and degradative interactions between cathode active material and solid electrolyte.

### Cyclic voltammetry of electrochemical cells

All-solid state electrochemical cells each comprising
- a working electrode comprising a mixture of
   (c) β-Li₃PS₄
   and either composite particles (b) consisting of carbon nanofibers coated with Al₂O₃ (coating formed by applying either 20 or 50 or 100 atomic layer deposition cycles, resp.) or uncoated (pristine) carbon nanofibers (comparison)
   wherein the amount of composite particles (b) resp. uncoated carbon nanofibers is 9.1 wt% based on the total weight of the cathode mixture
- a separator layer consisting of β-Li₃PS₄
- a counter/reference electrode comprising metallic indium
were assembled.

In the working electrode, the mass ratio between
(c) β-Li₃PS₄
and either composite particles (b) consisting of carbon nanofibers coated with Al₂O₃ (coating formed by applying either 20 or 50 or 100 atomic layer deposition cycles, resp.) or uncoated (pristine) carbon nanofibers (comparison)
is the same as in the cathodes of the all-solid sated cells used for the charge/discharge cycling tests described in the previous section. The working electrode does not contain a cathode active material because the aim of the cyclic voltammetry experiment is to determine whether an applied potential leads to decomposition reactions due to the interaction between solid electrolyte and carbon nanofibers.

The cyclic voltammetry experiment was carried out as follows: Starting at the open circuit potential an oxidative scan up to 5.5 V vs In/InLi was applied, followed by a reductive scan down to 0 V vs In/InLi, and a final oxidative scan back to the open circuit potential. The scan rate was 1.0 mV/s.

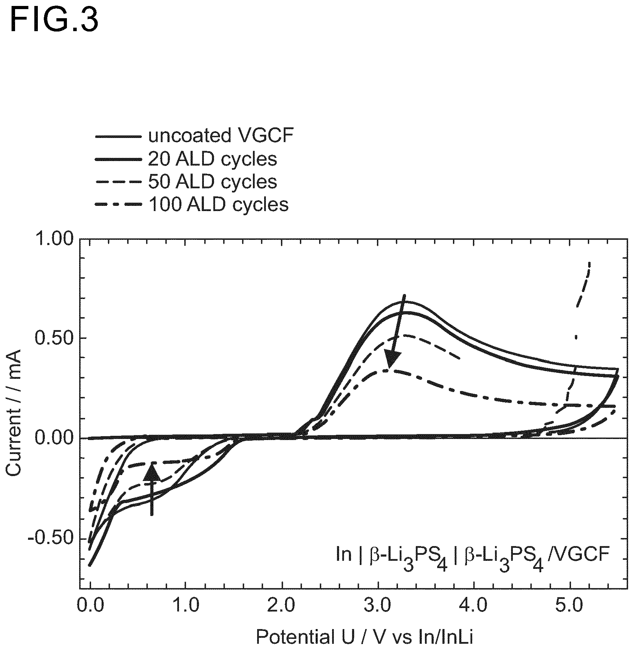

The cyclic voltammograms are shown in figure 3. The oxidative current occurring during the voltage cycle is attributed to degradation and decomposition processes resulting from interaction between solid electrolyte and carbon nanofibers. Most of the degradation and decompositions occurs in the potential range from 3 to 4 V vs In/InLi, which is within the typical voltage region of charging/discharging all-solid-state cells as described above. Thus, such degradation and decomposition processes as observed in the cyclic voltammogram are expected to occur in all-solid-state cells as described above.

The reductive current in the potential range below 1.5 V vs In/InLi is attributed to reduction processes of the degradation and decomposition products formed in the oxidative scan.

The comparison cell having a cathode comprising uncoated (pristine) carbon nanofibers exhibits the highest current, and the current decreases with increasing number of atomic layer deposition cycles applied for coating the carbon nanofibers (as indicated by the arrows in figure 3). This is a further indication that the Al₂O₃ coating (ii) on surface regions of the carbon nanofibers inhibits direct interaction between solid electrolyte and carbon nanofibers which results in suppressed electrolyte decomposition and degradation.

## Claims

1. Mixture for a cathode of an electrochemical cell, said mixture comprising the constituents
(a) particles of one or more materials capable of reversibly intercalating and de-intercalating lithium ions
(b) composite particles each comprising
(i) a basis structure comprising electron conducting carbon
and
(ii) deposited on a surface region of said basis structure a coating consisting of one or more metal oxides not capable of reversibly intercalating and de-intercalating lithium ions.

2. Mixture according to claim 1, wherein in constituent (a) said one or more materials capable of reversibly intercalating and de-intercalating lithium ions are selected from the group consisting of materials having a composition according to general formula (I)
Li₁₊ₜ[CoₓMn_{y}Ni_{z}Mᵤ]₁₋ₜO₂ (I)
wherein
0 ≤ x ≤ 1
0 ≤ y ≤ 1
0 ≤ z ≤ 1
0 ≤ u ≤ 0.15
M if present is one or more elements selected from the group consisting of Al, Mg, Ba, B, and transition metals other than Ni, Co, and Mn,
x + y + z > 0
x+y+z+u=1
-0.05 ≤ t ≤ 0.2.

3. Mixture according to any preceding claim wherein in constituent (b) said basis structure is selected from the group consisting of carbon nanofibers, carbon nanotubes, graphene, carbon black, acetylene black, coke, graphene oxide.

4. Mixture according to any preceding claim wherein in constituent (b) said metal oxides are selected from the group consisting of metal oxides having
- a specific electronic conductivity of 10⁻³ S/cm or less at a temperature of 298.25 K
and/or
- a band gap of 3 eV or more at 300 K
and/or
- a relative dielectric constant εᵣ of 3.9 or more at a temperature of 298.25 K.

5. Mixture according to any preceding claim, wherein in constituent (b) said metal oxides are selected from the group consisting of SiO₂, Al₂O₃, Y₂O₃, HfO₂, ZrO₂, La₂O₃, Ta₂O₅, TiO₂, ZnO, MgO, NiO, SnO₂, CeO₂, Ce₂O₃, and V₂O₃.

6. Mixture according to any preceding claim wherein in constituent (b) said coating deposited on a surface region of said basis structure has a thickness of 100 nm or less, preferably in the range of from 2 nm to 40 nm.

7. Mixture according to any preceding claim, further comprising (c) one or more lithium ion conducting solid electrolytes, wherein said one or more solid electrolytes are preferably selected from the group consisting of lithium containing sulfides, lithium containing oxysulfides, lithium-containing oxyphosphates, lithium-containing thiophosphates, lithium argyrodites, lithium transition metal halides, and lithium containing oxyphosphonitrides, salt-in-polymer-electrolytes, polymer single ion conductors.

8. Mixture according to any preceding claim, comprising
- constituent (a) in an amount of from 60 wt% to 99.9 wt%
- constituent (b) in a total amount of from 0.1 wt% to 10 wt%
- constituent (c) in an amount of from 0 wt% to 39.9 wt% in each case based on the total weight of said constituents (a), (b), and (c).

9. Mixture according to any preceding claim, comprising
(a) a material having a composition according to general formula (la)
Li₁₊ₜ[CoₓMn_{y}Ni_{z}]₁₋ₜO₂ (Ia)
wherein
0 ≤ x ≤ 1
0 ≤ y ≤ 1
0 ≤ z ≤ 1
x + y + z = 1
-0.05 ≤ t ≤ 0.2.
(b) composite particles each comprising (i) a basis structure which is a carbon nanofiber and (ii) a coating of Al₂O₃ deposited on a surface region of said carbon nanofiber
(c) optionally a solid electrolyte selected from the group consisting of lithium containing sulfides, lithium containing oxysulfides, lithium argyrodites, lithium transition metal halides and lithium-containing thiophosphates.

10. Mixture according to any of claims 1 to 9, further comprising (d) one or more binding agents.

11. Process for preparing a mixture according to any of claims 1 to 9, comprising the steps of
- preparing composite particles (b) by means of atomic layer deposition of a coating (ii) consisting of one or more metal oxides not capable of reversibly intercalating and de-intercalating lithium ions on surface regions of basis structures (i) comprising electron conducting carbon
- mixing said composite particles (b) with
(a) particles of one or more materials capable of reversibly intercalating and de-intercalating lithium ions
and optionally one or both of constituents
(c) one or more lithium ion conducting solid electrolytes
and
(d) one or more binding agents.

12. Cathode for an electrochemical cell comprising a mixture according to any of claims 1 to 10.

13. Electrochemical cell comprising a cathode according to claim 12, wherein the electrochemical cell is preferably an all solid-state cell.

14. Electrochemical cell according to claim 13 comprising
- a cathode according to claim 12
- an anode capable of reversibly plating and stripping lithium metal resp. intercalating and de-intercalating lithium ions
- a separator layer comprising or consisting of a one or more lithium ion conducting solid electrolytes positioned between said cathode and said anode.

15. Use of
(b) composite particles each comprising
(i) a basis structure comprising electron conducting carbon
and
(ii) deposited on a surface region of said basis structure a coating consisting of one or more metal oxides not capable of reversibly intercalating and de-intercalating lithium ions
as electron-conducting additive for the cathode of an electrochemical cell.
